# EUROPÄISCHE PATENTSCHRIFT

(11) **EP 0 575 585 B1**
(45) Veröffentlichungstag und Bekanntmachung des Hinweises auf die Patenterteilung: **12.03.1997**
(21) Anmeldenummer: 93901579.8
(22) Anmeldetag: 20.01.1993
(51) Int. Cl.: F16C 29/04

(54) **WÄLZ-LINEARFÜHRUNG MIT KÄFIG**
LINEAR ROLLER-BEARING RACEWAY WITH CAGE
GUIDAGE A ROULEAUX LINEAIRE AVEC CAGE

(30) Priorität: 21.01.1992 DE 4201453
(43) Veröffentlichungstag der Anmeldung: 29.12.1993
(73) Patentinhaber: Hydrel AG, CH-8590 Romanshorn (CH)
(72) Erfinder: ENGBERSEN, Gerhard, CH-8590 Romanshorn (CH); GREINER, Heinz, D-7333 Ebersbach (DE); SCHORSCHER, Peter, CH-8599 Salmsach (CH)
(74) Vertreter: Münch, Otto
(86) Internationale Anmeldenummer: CH9300012
(87) Internationale Veröffentlichungsnummer: WO9314326

(56) Entgegenhaltungen:
- DE-A- 3 626 174
- PATENT ABSTRACTS OF JAPAN vol. 5, no. 189 (M-99)28. November 1981 & JP-A-56 109 922 (NIPPON SEIKO) 31 August 1981

## Beschreibung

Als Rollen-Linearführung ist die sogenannte M-V-Führung bekannt. Sie besteht aus einer Schiene mit M-förmigem Querschnitt und einer zweiten Schiene mit V-förmigem Querschnitt. Dazwischen sind zwei Reihen von Rollen in einem im Querschnitt V-förmigen Käfig gehalten. Diese M-V-Führungen haben eine hohe Tragfähigkeit. Allerdings sind sie etwas teuer in der Herstellung.

Andererseits sind sogenannte Kreuzrollen-Führungen bekannt, bei welchen jede der beiden Schienen eine V-förmige Nut mit zwei Laufbahnen hat. Die unterquadratischen Rollen sind abwechslungsweise in der einen oder der andern Richtung orientiert. Der Käfig umgreift die Rollen an ihren Stirnseiten. Dadurch muss deren Länge wesentlich geringer sein als deren Durchmesser. Bei diesen Kreuzrollen-Führungen kann auch die Anzahl der nach der einen Seite orientierten Rollen verschieden sein von der Anzahl der nach der andern Seite orientierten Rollen. Dadurch kann die Führung der vorherrschenden Querbelastung angepasst werden. Dazu ist allerdings eine relativ aufwendige Käfigkonstruktion erforderlich, bei welcher der Käfig aus einer Vielzahl von miteinander um die Käfiglängsachse drehbar verbundenen Kunststoffteilen besteht, die je eine Rolle fassen. Kreuzrollen-Führungen sind in der Herstellung billiger als M-V-Führungen, haben aber bei gleichen Abmessungen eine geringere Tragfähigkeit.

Aus der DE-A-3 626 174 ist eine weitere Kreuzrollenführung bekannt. Der Käfig dieser Linearführung ist relativ dick und hat rechteckige Öffnungen für die Rollen ausgestanzt. An den Schmalseiten der Öffnungen sind Haltezungen angeformt. Die Haltezungen haben beidseitige Prägungen, derart, dass an diametral gegenüberliegenden Stellen Haltenasen die Stirnkanten der Rollen umgreifen, also sowohl die Stirnfläche als auch die zylindrische Lauffläche der Rollen berühren. Dadurch sind die Rollen formschlüssig gehalten. Der relativ dicke Käfig reduziert allerdings die Breite der aktiven Laufflächen und somit die Tragfähigkeit.

Ein weiterer Kreuzrollenkäfig ist aus der gattungsgemäßen JP-A-56 109922 bekannt. Die Rollen sind in eliptischen Öffnungen des Käfigs gehalten. Der Rollendurchmesser ist annäherend gleich der axialen Länge der Rollen. Der Käfig besteht aus zwei zusammengeschweissten Streifen. Jeder Streifen hat bei jeder Öffnung einen unter 45° abstehenden Lappen, der auf der betreffenden Stirnfläche der eingesetzten Rollen gleitet. Diese Lappen bedingen ebenfalls einen relativ breiten Spalt zwischen den beiden Schienen, was die Tragfähigkeit reduziert.

Der vorliegenden Erfindung liegt die Aufgabe zugrunde, einen Käfig und eine Linearführung anzugeben, welche eine hohe Tragfähigkeit bei kostengünstiger Herstellung ermöglichen. Diese Aufgabe wird durch die Merkmalskombination der Ansprüche gelöst.

Nachfolgend wird ein Ausführungsbeispiel der Erfindung anhand der Zeichnungen erläutert. Darin zeigt:
- Fig. 1: einen Querschnitt durch eine Rollen-Linearführung,

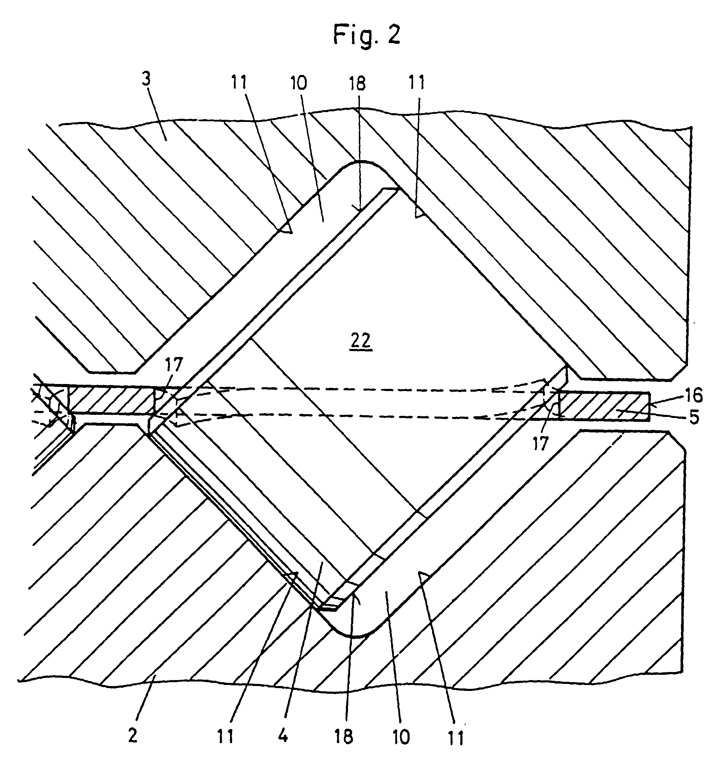

- Fig. 2: einen vergrösserten Ausschnitt aus der Darstellung nach Fig. 1,
- Fig. 3 und Fig. 4: Draufsichten auf zwei Varianten des Käfigs, und
- Fig. 5: eine perspektivische Darstellung einer in eine Käfigöffnung eingesetzten Rolle.

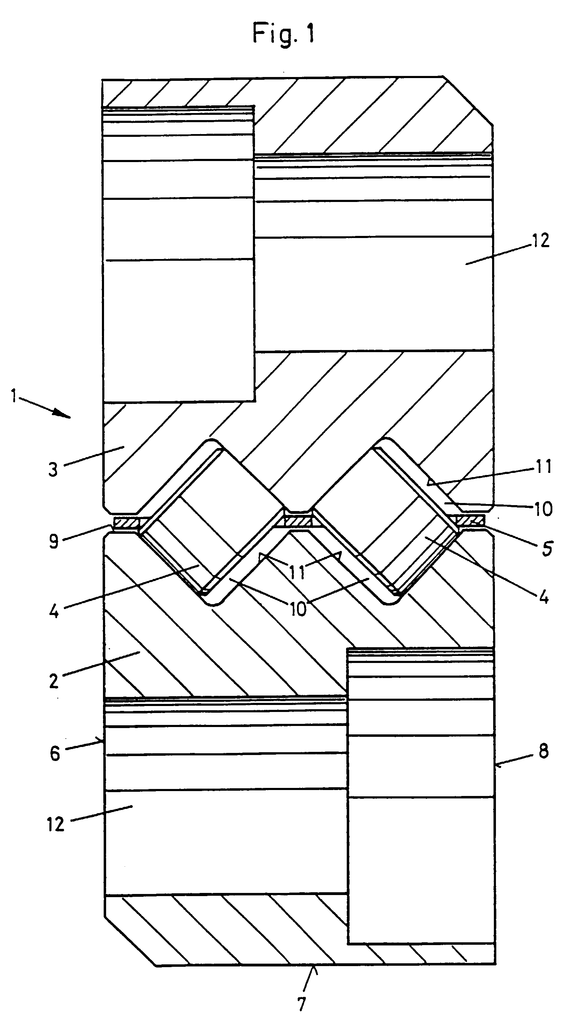

Die Linearführung 1 nach Fig. 1 besteht aus zwei identischen Schienen 2, 3, mehreren Rollen 4 und einem die Rollen 4 in regelmässigen Abständen haltenden Käfig 5. Jede Schiene 2, 3 hat einen im wesentlichen rechteckigen Querschnitt mit plangeschliffenen Flächen 6, 7, 8, 9. In den einander zugewandten, zueinander parallelen Flächen 9 sind zwei V-förmige Längsnuten 10 geschliffen mit zwei senkrecht zueinander stehenden Laufbahnen 11 für die Rollen 4. Je zwei einander gegenüberliegende Nuten 10 der beiden Schienen 2, 3 bilden zusammen im Querschnitt ein Quadrat. Die Schienen 2, 3 haben ferner zur Befestigung eine Reihe von Durchgangsbohrungen 12 mit Ansenkungen 13.

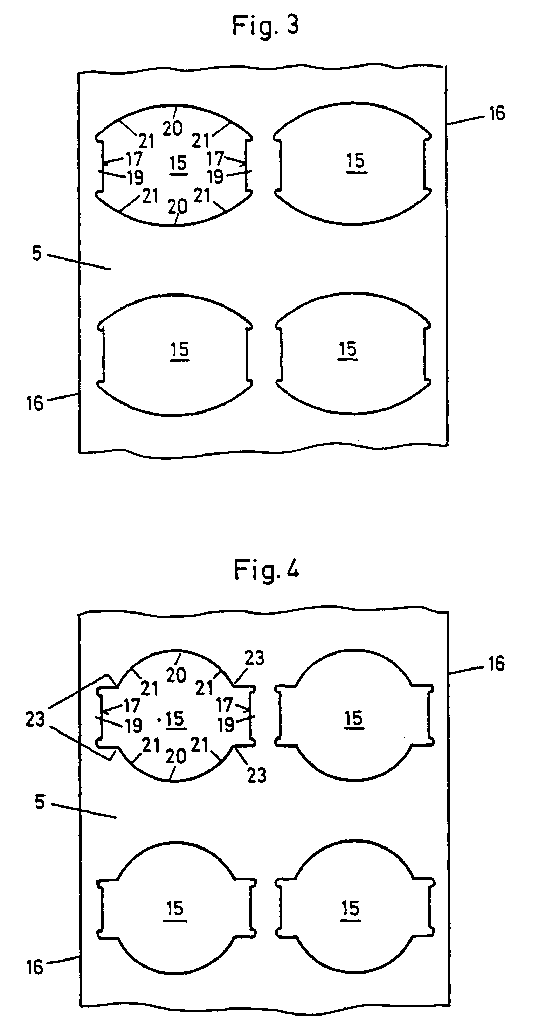

Der Käfig 5 (Fig. 3 - 5) hat zwei Reihen von regelmässig beabstandeten Öffnungen 15, in welchen die Rollen 4 eingesetzt sind. Jede Öffnung 15 hat zwei parallel zum Längsrand 16 des Käfigs 5 verlaufende Anlageschultern 17, die unter leichter Vorspannung an den gegenüberliegenden Stirnflächen 18 der Rollen 4 anliegen. Dazu sind die Anlageschultern 17 an kurzen, federnden Lappen 19 ausgebildet. Je zwei bogenförmige Ränder 20 der Oeffnung 15 verbinden die Schultern 17 miteinander. Jeder Rand 20 hat benachbart den beiden Schulter 17 zwei Berührungsstellen 21, mit welchen der Käfig 5 den zylindrischen Aussenumfang 22 der Rollen 4 berührt. Durch diese Ausbildung sind die Rollen 4 in den Öffnungen 15 formschlüssig und unverlierbar gehalten; sie sind in die Öffnungen 15 eingeschnappt.

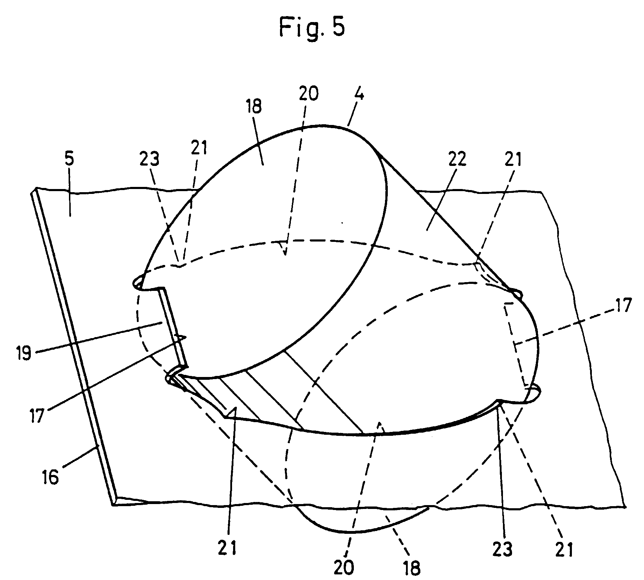

Die Variante nach Fig. 4 und 5 unterscheidet sich dadurch von jener nach Fig. 3, dass die Berührungsstellen 21 an plastisch und/oder elastisch deformierten Lappen 23 ausgebildet sind. Dadurch wird die Anlagefläche vergrössert und der Verschleiss vermindert. Die elastische Anpressung der Schultern 17 und der Berührungsstellen 21 durch die Lappen 19, 23 hat eine gewisse Bremswirkung auf die Rollen 4, was in einigen Anwendungsfällen erwünscht ist.

Vorzugsweise sind sämtliche Rollen 4 einer Reihe gleich orientiert und im rechten Winkel zur Orientierung der Rollen der anderen Reihe. Bei dieser Anordnung kann bei festgestelltem Verschleiss der Laufbahnen 11 der Käfig 5 mit den Rollen 4 einfach um 180° gewendet werden, so dass nun die Rollen 4 auf den noch unverschlissenen, andern Laufbahnen 11 laufen. Dadurch kann die Lebensdauer der Schienen 2, 3 verdoppelt werden.

Wenn andererseits die Linearführung erhebliche Querkräfte in der einen Richtung zu übertragen hat, kann es zweckmässig sein, bei der durch diese Querkräfte nicht belasteten Reihe einige der Rollen 4 mit gegensinniger Orientierung einzubauen. Dadurch ist die Linearführung leicht an die zu übertragende Belastung anpassbar.

Verglichen mit einer Kreuzrollen-Führung gleicher Belastbarkeit ist die erfindungsgemässe Linearführung wesentlich niedriger.

Der einfach aus einem flachen Band gestanzte Käfig 5 ist preiswert herstellbar. Vorzugsweise besteht er aus Metall, kann aber auch aus Kunststoff hergestellt werden. Der erfindungsgemässe Käfig kann mit Vorteil auch bei einer Kreuzrollen-Führung, also bei einer Linearführung mit nur einer einzigen Reihe von Rollen 4 eingesetzt werden.

## Patentansprüche

1. Käfig für eine Wälz-Linearführung (1) mit Rollen (4), wobei der Käfig (5) aus einem flachen, ebenen Band besteht, das in regelmässigen Abständen Öffnungen (15) aufweist, in denen je eine der Rollen (4) formschlüssig gehalten ist, wobei die axiale Länge der Rollen (4) geringer ist als deren Durchmesser und wobei jede Öffnung (15) zwei parallel zur Längserstreckung des Käfigs (5) verlaufende Anlageschultern (17) zur Anlage an den beiden Stirnflächen (18) der Rollen (4) und zwei die Anlageschultern (17) verbindende, bogenförmige Ränder (20) mit je zwei Berührungsstellen (21) zur Anlage am zylindrischen Aussenumfang (22) der Rollen (4) aufweist dadurch gekennzeichnet, daß die Anlage schultern (17) an in der Ebene des Bandes liegenden Lappen (19) ausgebildet sind.

2. Käfig nach Anspruch 1, wobei der Käfig (5) an den Berührungsstellen (21) mit den Rollen (4) zur Vergrösserung der Berührungsfläche mit den Rollen (4) deformiert ist.

3. Käfig nach Anspruch 1 oder 2, wobei mindestens eine der Anlageschultern (17) an einem federnden Lappen (19) ausgebildet und gegen die Stirnflächen (18) vorgespannt ist.

4. Käfig nach einem der Ansprüche 1 bis 3, wobei der Käfig (5) mehrere parallele Reihen der genannten Öffnungen (15) aufweist.

5. Wälz-Linearführung umfassend einen Käfig gemäss einem der Ansprüche 1-4, eine erste Schiene (2) und eine zweite Schiene (3), wobei beide Schienen (2, 3) an den einander zugewandten Flächen (9) mindestens eine Nut (10) aufweisen und je zwei Nuten (10) der beiden Schienen (2, 3) einander gegenüberliegen, wobei die Nuten (10) V-förmig sind mit im rechten Winkel zueinander angeordneten Laufbahnen (11) und die beiden einander gegenüberliegenden Nuten (10) im Querschnitt ein Quadrat bilden, und wobei Rollen (4) vorgesehen sind, deren axiale Länge geringer ist als deren Durchmesser, und deren zylindrischer Aussenumfang auf den Laufbahnen (11) abrollt.

6. Linearführung nach Anspruch 5 mit einem Käfig nach Anspruch 4, wobei die beiden Schienen (2, 3) je mindestens zwei parallele Nuten (10) aufweisen.

7. Linearführung nach Anspruch 5 oder 6, wobei die beiden Schienen (2, 3) identische Abmessungen haben.

8. Linearführung nach Anspruch 6, wobei alle in einer der Nuten (10) abrollenden Rollen (4) gleich orientiert sind.

## Claims

1. Cage for a linear roller bearing raceway (1) having rollers (4), the cage (5) being made of a flat, even strip which has apertures (15) at regular intervals, in each of which one of the rollers (4) is respectively held in form-fitting manner, the axial length of the rollers (4) being smaller than their diameter, and each aperture (15) having two abutment shoulders (17) extending parallel to the longitudinal extension of the cage (5) to support the roller (4) at both end faces (18) and two curved edges (20), joining the abutment shoulders (17), having two contact points (21) for supporting the roller (4) on the cylindrical outer circumference (22), characterised in that the abutment shoulders (17) are formed on lugs (19) lying in the plane of the strip.

2. Cage according to claim 1, the cage (5) being deformed at the contact points (21) with the rollers (4) to increase the contact surface with the rollers (4).

3. Cage according to claim 1 or 2, at least one of the abutment shoulders (17) being formed on a resilient lug (19) and biassed towards the end faces (18).

4. Cage according to one of claims 1 to 3, the cage (5) having several parallel rows of the above-mentioned apertures (15).

5. Linear roller bearing raceway including a cage in accordance with one of claims 1 to 4, a first rail (2) and a second rail (3), both rails (2, 3) having at least one groove (10) on the facing surfaces (9), and two respective grooves (10) of the two rails (2, 3) being located opposite each other, the grooves (10) being V-shaped with roller paths (11) arranged at right angles to each other, and the two opposite grooves (10) forming a square in cross-section, and rollers (4) being provided whose axial length is smaller than their diameter, and whose cylindrical external circumference rolls on the roller paths (11).

6. Linear raceway according to claim 5 having a cage in accordance with claim 4, wherein the two rails (2, 3) have at least two parallel grooves (10).

7. Linear raceway according to claim 5 or 6, wherein the two rails (2, 3) have identical dimensions.

8. Linear raceway according to claim 6, wherein all the rollers (4) rolling in one of the grooves (10) have the same orientation.

## Revendications

1. Cage pour un système de guidage linéaire à rouleaux (1) comportant des rouleaux (4), la cage (5) étant constituée par une bande plane et unie qui possède à des intervalles réguliers des ouvertures (15) dans chacune desquelles l'un des rouleaux (4) est retenu selon une liaison par formes complémentaires, la longueur axiale des rouleaux (4) étant inférieure à leur diamètre et chaque ouverture (15) possédant des épaulements d'application (17) qui s'étendent parallèlement à l'étendue longitudinale de la cage (5) et sont destinés à s'appliquer contre les deux faces frontales (18) des rouleaux (4) et de bords de forme arquée (20) qui relient les épaulements d'application (17) et comportent respectivement deux zones de contact (21) destinées à s'appliquer contre le pourtour extérieur cylindrique (22) des rouleaux (4), caractérisé en ce que les épaulements d'application (17) sont formés sur des pattes (19) situées dans le plan de la bande.

2. Cage selon la revendication 1, la cage (5) étant déformée au niveau des emplacements (21) de contact avec les rouleaux (4) pour augmenter la surface de contact avec les rouleaux (4).

3. Cage selon la revendication 1 ou 2, dans laquelle au moins l'un des épaulements d'application (17) est formé sur une patte élastique (19) et est précontraint contre les surfaces frontales (18).

4. Cage selon l'une des revendications 1 à 3, dans laquelle la cage (5) comporte plusieurs séries parallèles desdites ouvertures (15).

5. Système de guidage linéaire à rouleaux comprenant une cage selon l'une des revendications 1-4, un premier rail (2) et un second rail (3), les deux rails (2,3) possédant, dans les surfaces (9) qui sont situées en vis-à-vis, au moins une rainure (10) et dans laquelle respectivement deux rainures (10) des deux rails (2,3) sont disposés en vis-à-vis, les rainures (10) étant agencées en forme de V et comportant des pistes de roulement (11) qui sont perpendiculaires entre elles, et les deux rainures (10) situées respectivement en vis-à-vis forment un carré en coupe transversale, et dans lequel il est prévu des rouleaux (4), dont la longueur axiale est inférieure à leur diamètre et dont la périphérie extérieure cylindrique roule sur les pistes de roulement (11).

6. Système de guidage linéaire selon la revendication 5, comportant une cage selon la revendication 4, dans lequel les deux rails (2,3) comportent chacun au moins deux rainures parallèles (10).

7. Système de guidage linéaire selon la revendication 5 ou 6, dans lequel les deux rails (2,3) ont des dimensions identiques.

8. Système de guidage linéaire selon la revendication 6, dans lequel tous les rouleaux (4) qui roulent dans l'une des rainures (10), possèdent la même orientation.
